# FASCICULE DE BREVET EUROPEEN

(11) **EP 0 701 770 B1**
(45) Date de publication et mention de la délivrance du brevet: **27.03.2002**
(21) Numéro de dépôt: 95440058.6
(22) Date de dépôt: 08.09.1995
(51) Int. Cl.: A01B 73/04

(54) **Mécanisme de verrouillage destiné à équiper principalement une machine agricole**
Verriegelungsmechanismus zur Ausrüstung einer Landmaschine
Locking mechanism for agricultural machine

(30) Priorité: 16.09.1994 FR 9411230
(43) Date de publication de la demande: 20.03.1996
(73) Titulaire: KUHN S.A., 67700 Saverne (FR)
(72) Inventeur: Neuerburg, Horst, F-67700 Saverne (FR); Ermacora, Rino, F-67700 Saint Jean Saverne (FR); Haberkorn, Jean-Paul, F-67700 Monswiller (FR); Lacroix, Jean-Paul, F-67670 Mommenheim (FR); Wilhelm, Joel, F-57820 Saint Louis (FR)

(56) Documents cités:
- DE-A- 1 557 674
- FR-A- 1 304 076
- FR-A- 1 553 252
- US-A- 3 123 153
- US-A- 3 509 946
- US-A- 3 511 319

## Description

La présente invention concerne une machine agricole telle que définie dans le préambule de la revendication principale.

Un tel mécanisme de verrouillage pouvant équiper une machine agricole est connu de l'homme de l'art. Ce mécanisme de verrouillage connu comporte un support fixe destiné à être fixé sur la machine agricole, lequel comporte un loquet destiné à immobiliser l'ensemble escamotable par rapport à la structure fixe. Ce loquet est lié au support fixe du mécanisme de verrouillage au moyen d'une liaison pivot et d'un ressort spiral tendant toujours à désactiver le mécanisme, c'est-à-dire faire basculer le loquet vers le haut pour permettre à l'ensemble escamotable de s'escamoter.

Pour assurer le verrouillage de l'ensemble escamotable par rapport à la structure fixe, il est prévu en sus un verrou destiné à maintenir le loquet dans sa position verrouillée. Le verrou est lié au support fixe du mécanisme de verrouillage au moyen d'une liaison pivot d'axe perpendiculaire à celui de la liaison pivot du loquet. Le verrou est équipé d'un ressort spiral tendant toujours à maintenir le verrou en position verrouillée. La liaison pivot liant le verrou au support fixe comporte une vis vissée d'une part dans ledit verrou et liée d'autre part au support fixe.

Une action sur ladite vis, de préférence au moyen d'un outil approprié, fait pivoter le verrou permettant ainsi de libérer le loquet.

Ainsi, dès que le verrou a franchi le point critique, le loquet éjecte automatiquement l'ensemble escamotable sous l'effet de son ressort spiral permettant ensuite audit verrou de revenir dans sa position initiale sous l'effet de son ressort, dès que l'opérateur relâche son action sur la vis.

L'opérateur escamote ensuite l'ensemble escamotable de cette position déverrouillée intermédiaire dans la position escamotée finale. En position déverrouillée, le loquet reste ouvert et le verrou fermé sous l'effet des ressorts spiraux respectifs permettant d'obtenir un verrouillage rapide de l'ensemble escamotable et de la structure fixe. En effet, le loquet et le verrou comportent des formes relativement complexes de manière que, lors du verrouillage, l'ensemble escamotable agit sur le loquet, fait pivoter ce dernier vers le bas, ce qui permet d'ouvrir le verrou.

En fin de course, le verrou se referme automatiquement sous l'action de son ressort spiral, l'ensemble escamotable est verrouillé.

Ce mécanisme de verrouillage présente cependant un certain nombre d'inconvénients. En effet, on remarquera que ce mécanisme de verrouillage comporte une multitude de pièces relativement complexes, ce qui se traduit par un prix de revient élevé.

D'autre part, la vis permettant de commander le déverrouillage peut être facilement accessible à la main selon l'emplacement du mécanisme de verrouillage sur la machine agricole et peut, de ce fait, être actionnée par ladite seule main si les ressorts sont faibles ou fatigués.

Ce mécanisme connu présente encore un autre inconvénient. En effet, comme expliqué ci-avant, une fois l'ensemble escamotable déverrouillé, l'opérateur doit escamoter, dans un deuxième temps, l'ensemble escamotable de cette position déverrouillée intermédiaire dans la position escamotée finale, ce qui présente un risque majeur. Effectivement, l'opérateur risque de ne pas effectuer l'opération d'escamotage après le déverrouillage, si son attention est détournée. Dans ce cas de figure, l'ensemble escamotable risque de rester dans la position déverrouillée intermédiaire mettant ainsi en danger les personnes avoisinantes, lorsque par exemple ledit ensemble escamotable est un protecteur qui englobe des outils animés.

Le but de la présente invention est de remédier aux inconvénients du mécanisme de verrouillage décrit ci-avant, c'est-à-dire concevoir d'une part un mécanisme de verrouillage simple dont l'accès manuel est impossible et d'autre part un mécanisme de verrouillage nécessitant un déverrouillage et un escamotage en une seule phase.

A cet effet, dans au moins une position d'immobilisation dudit ensemble escamotable, le déverrouillage et l'escamotage de l'ensemble escamotable nécessitent une action simultanée sur l'outil approprié et sur ledit ensemble escamotable, le déverrouillage dudit mécanisme de verrouillage n'étant possible qu'au travers d'au moins un orifice calibré au moyen dudit outil approprié.

Selon une autre caractéristique supplémentaire de l'invention, le déverrouillage demande un grand effort et n'est possible qu'au moyen d'un outil approprié qui est un levier de déverrouillage.

Selon une autre caractéristique supplémentaire de l'invention, l' (les) élément(s) d'arrêt dudit mécanisme de verrouillage est (sont) solidaire(s) de l'ensemble escamotable ou de la structure fixe.

Selon une autre caractéristique de l'invention, au moins un élément d'arrêt est destiné à collaborer avec au moins un élément complémentaire solidaire de la structure fixe ou de l'ensemble escamotable dans au moins une position de verrouillage.

Selon une autre caractéristique supplémentaire de l'invention, l'(les) articulation(s) liant l'ensemble escamotable à la structure fixe est du type pivot.

Selon une autre caractéristique supplémentaire de l'invention, le mécanisme de verrouillage comporte un dispositif de protection destiné à éviter, lors de la manoeuvre dudit mécanisme de verrouillage, de générer des zones susceptibles de blesser l'opérateur.

Selon une autre caractéristique supplémentaire de l'invention, chaque orifice calibré est situé sur l'ensemble escamotable ou la structure fixe au moins sensiblement en face de l' (des) élément(s) d'arrêt correspondant(s).

Selon une autre caractéristique supplémentaire de l'invention, dans au moins une autre position de verrouillage que celle nécessitant un outil approprié, le déverrouillage de l'ensemble escamotable peut être effectué sans outil approprié, au moyen d'une poignée aisément accessible.

Selon une autre caractéristique supplémentaire de l'invention, l' (les) élément(s) élastique(s) est (sont) composé(s) d'au moins une tôle en acier ressort.

Avantageusement, l' (les) élément(s) élastique(s) est (sont) d'une part de forme allongée et, à l'une au moins de ses (leurs) extrémités, de largeur inférieure ou égale à la dimension extérieure d'un profilé de la structure fixe et est (sont) d'autre part situé(s) à proximité et au moins sensiblement dans le prolongement dudit profilé lorsque l' (les) élément(s) élastique(s) est (sont) dans au moins une position verrouillée de manière que l'accès et la prise manuelle dudit (desdits) élément(s) élastique(s) soient impossibles.

Selon une autre caractéristique de l'invention, le mécanisme de verrouillage comporte deux éléments d'arrêt composés chacun d'un téton fixé aux alentours de l'extrémité respective de l'élément élastique.

Selon une autre caractéristique de l'invention, le dispositif de protection est composé d'une tablette en matière souple fixée à l'élément élastique.

Selon une autre caractéristique supplémentaire de l'invention, chaque articulation liant l'ensemble escamotable à la structure fixe comporte deux ailes formant une chape située aux alentours d'une extrémité de l'ensemble escamotable, entre lesquelles s'étend d'une part une extrémité de la structure fixe et d'autre part l' (les) élément(s) élastique(s) muni(s) d'un dispositif de protection, l'ensemble étant maintenu par un tourillon traversant de part en part les différents éléments.

Selon une caractéristique supplémentaire de l'invention, l' (les) élément(s) élastique(s) est (sont) composé(s) d'au moins un ressort spiral.

Avantageusement, chaque élément d'arrêt comporte au moins un loquet monté sur la structure fixe au moyen d'une liaison pivot.

Selon une autre caractéristique supplémentaire de l'invention, la liaison pivot liant le loquet respectif à la structure fixe, comporte au moins une vis sur laquelle est monté ledit loquet respectif et le ressort spiral correspondant assurant le rappel dudit loquet.

L'invention concerne également une machine agricole comprenant un ensemble escamotable lié à une structure fixe au moyen d'au moins une articulation et un mécanisme de verrouillage permettant d'une part d'immobiliser ledit ensemble escamotable par rapport à ladite structure fixe, dans au moins une position, au moyen d'au moins un élément élastique et d'au moins un élément d'arrêt et d'autre part de libérer ledit ensemble escamotable au moyen d'un outil approprié, laquelle machine agricole est équipée d'un dispositif selon l'invention.

D'autres objets et caractéristiques de l'invention ressortiront de la description ci-après, avec référence aux dessins annexés qui représentent à titre d'exemple non limitatif quelques formes de réalisation de la machine agricole selon l'invention.

Sur ces dessins :
- la figure 1 est une vue de côté d'une première forme de réalisation du mécanisme de verrouillage, l'ensemble escamotable étant en position dépliée ;
- la figure 2 est une vue de côté du mécanisme de verrouillage représenté sur la figure 1, l'ensemble escamotable étant en position escamotée ;
- la figure 3 est une vue de dessus du dispositif représenté sur la figure 1 (l'outil approprié a été esquissé en traits mixtes) ;
- la figure 4 est une vue en coupe suivant le plan IV défini sur la figure 1, à une autre échelle ;
- la figure 5 est une vue de côté selon une deuxième forme de réalisation du mécanisme de verrouillage en position verrouillée (l'outil approprié a été esquissé en traits mixtes) ;
- la figure 6 est une vue de côté du mécanisme de verrouillage représenté sur la figure 5, en cours de déverrouillage (une des positions déverrouillées a été esquissée en traits interrompus et l'outil approprié en traits mixtes) ;
- la figure 7 est une vue en coupe, suivant le plan VII défini sur la figure 6, à une autre échelle.

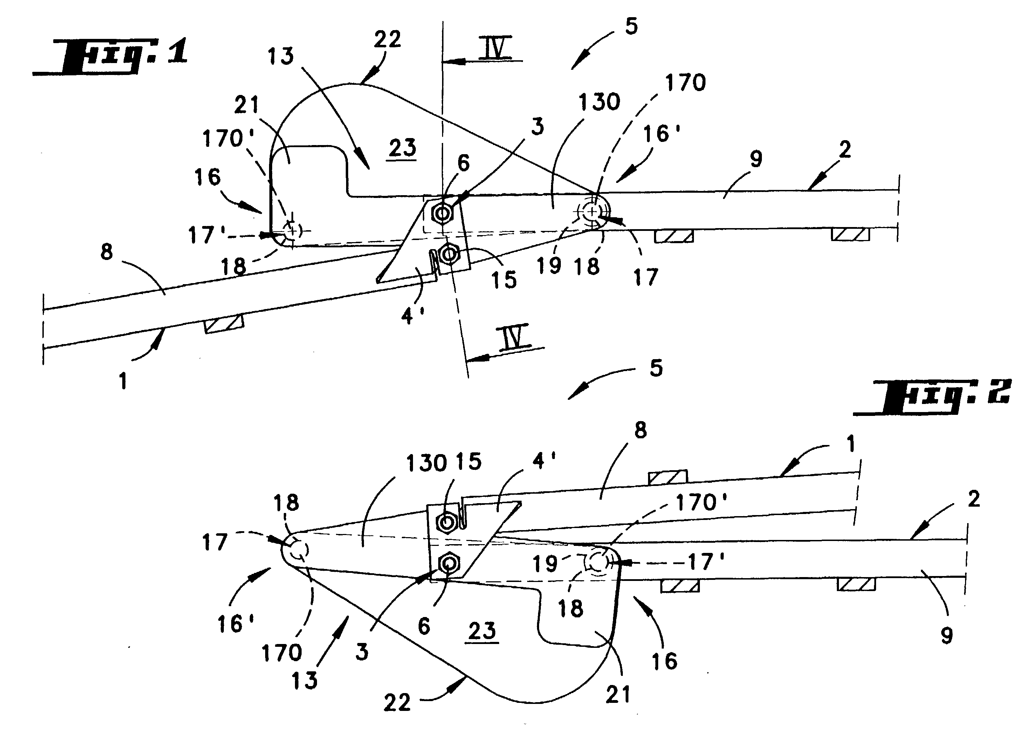

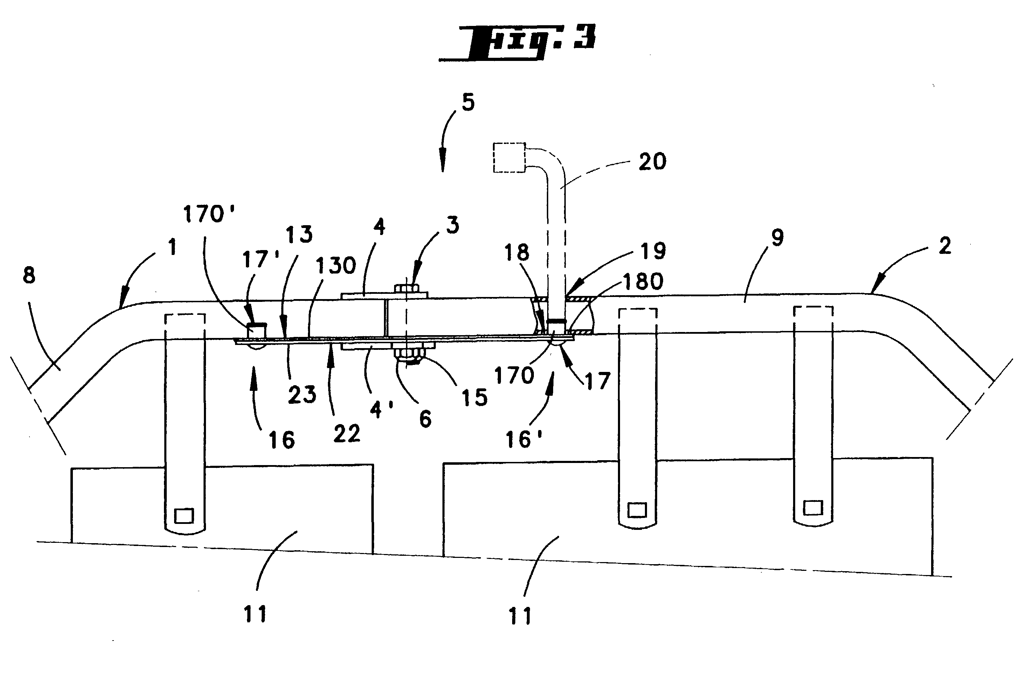

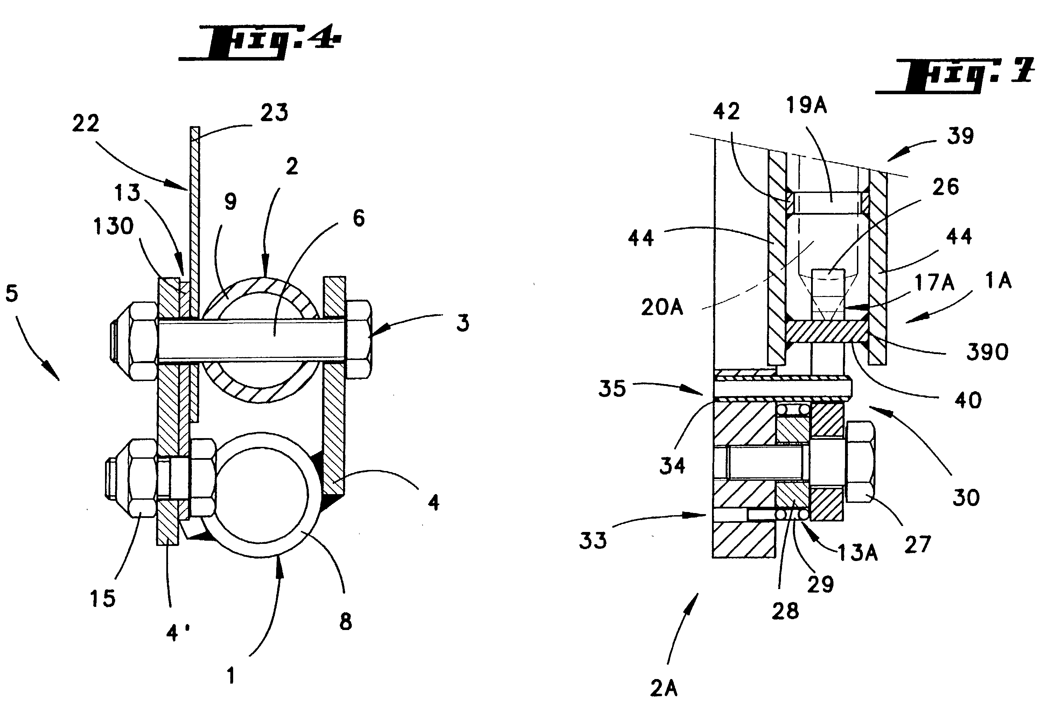

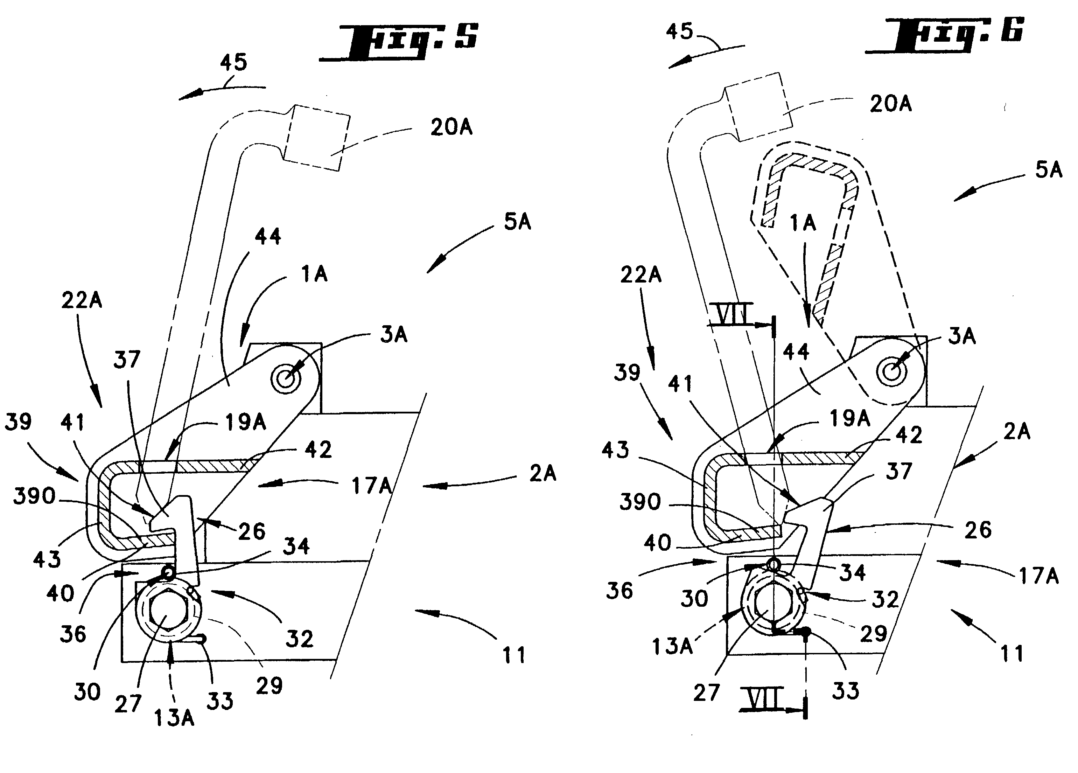

Sur les figures 1 à 4 on voit un mécanisme de verrouillage (5) implanté entre un ensemble escamotable (1) et une structure fixe (2) ledit ensemble escamotable (1) étant lié à ladite structure fixe (2) au moyen d'une articulation (3) du type pivot. Ladite articulation (3) est composée selon l'exemple représenté de deux ailes (4, 4') fixées aux alentours de l'extrémité de l'ensemble escamotable (1) lesquelles forment une chape s'étendant vers le haut lorsque l'ensemble escamotable (1) est déplié. Entre les deux ailes (4, 4') s'étend d'une part l'extrémité de la structure fixe (2) et d'autre part un élément élastique (13), le tout (4, 4', 2 ; 13) étant maintenu ensemble au moyen d'un tourillon (6) traversant de part en part les deux ailes (4, 4'), l'extrémité de la structure fixe (2) et l'élément élastique (13). Ledit tourillon (6) est selon l'exemple représenté un boulon prenant appui sur les faces extérieures des ailes (4, 4').

L'élément élastique (13) est selon cette forme de réalisation une tôle en acier ressort (130) fixée à l'ensemble escamotable (1) au moyen d'un boulon (15) et du tourillon (6). Lorsque l'ensemble escamotable (1) est dans la position dépliée, la tôle en acier ressort (130) est positionnée d'une part au moins sensiblement parallèlement à la structure fixe (2) et d'autre part entre l'aile (4') et les tubes (8 ; 9) de l'ensemble escamotable (1) et de la structure fixe (2).

L'élément élastique (13) comporte, aux alentours de chacune de ses deux extrémités (16 ; 16'), un élément d'arrêt (17 ; 17') respectif composé chacun selon cette forme de réalisation d'un téton (170 ; 170') riveté sur ladite tôle en acier ressort (130). L'élément élastique (13) est d'une part de forme longitudinale et à l'une au moins de ses extrémités (16') de largeur inférieure ou égale au diamètre extérieur du tube (9) de la structure fixe (2) et est d'autre part situé à proximité et au moins sensiblement dans le prolongement dudit tube (9) lorsque l'élément élastique (13) est dans au moins une position verrouillée.

Un tel agencement rend l'accès et la prise à l'élément élastique (13) impossibles avec la main. Par contre, on voit qu'à l'autre extrémité (16) de l'élément élastique (13) est prévue une poignée (21) intégrée dans l'élément élastique (13) et située aux alentours de l'élément d'arrêt (17'). La largeur de la poignée (21) est supérieure au diamètre extérieur du tube (9), de manière à ce que l'opérateur puisse accéder aisément à la main audit élément élastique (13) lorsque l'ensemble escamotable (1) est en position escamotée.

Lorsque l'ensemble escamotable (1) est dans une de ses positions verrouillées, chaque élément d'arrêt (17 ; 17') est destiné à venir se loger dans un élément complémentaire (18) qui est, selon cette forme de réalisation, un orifice de verrouillage (180) prévu dans la structure fixe (2). On notera que le mécanisme de verrouillage (5) comporte selon l'exemple représenté une position de verrouillage lorsque l'ensemble escamotable (1) est déplié et une autre position de verrouillage lorsque ce dernier est escamoté.

Pour assurer un bon logement des éléments d'arrêt (17 ; 17') dans l'orifice de verrouillage (180), le diamètre de l'orifice de verrouillage (180) est supérieur au diamètre extérieur d'un élément d'arrêt (17 ; 17').

L'orifice de verrouillage (180) est un trou prévu dans le tube (9) de la structure fixe (2) et situé en retrait par rapport à l'articulation (3). Au moins sensiblement en face de l'orifice de verrouillage (180) est réalisé un orifice calibré (19) permettant de commander le déverrouillage uniquement au moyen d'un outil approprié (20) lorsque l'ensemble escamotable (1) est dans sa position dépliée.

On notera que l'orifice calibré (19) est de diamètre plus petit que le diamètre de l'orifice de verrouillage (180) et que le diamètre extérieur de l'outil approprié (20) est légèrement plus petit que le diamètre de l'orifice calibré (19). On notera également que lorsque l'un des éléments d'arrêt (17 ; 17') est logé dans l'orifice de verrouillage (180), l'élément élastique (13) n'est pratiquement pas soumis à des contraintes.

Le mécanisme de verrouillage (5) est également doté d'un dispositif de protection (22) destiné à protéger l'opérateur en évitant de générer des zones de coincement susceptibles de blesser ce dernier. A cet effet, une tablette (23) est fixée latéralement sur l'élément élastique (13) au moyen des tétons (170 ; 170') rivetés sur ledit élément élastique (13), ladite tablette (23) est en matière souple de manière à autoriser une déformation de l'élément élastique (13) lors de l'action de déverrouillage.

La tablette (23) bénéficie d'une forme curviligne et s'étend de la poignée (21) vers l'extrémité (16') de l'élément élastique (13) en convergeant.

Lorsque l'ensemble escamotable (1) est dans sa position dépliée (figures 1 et 3), l'élément d'arrêt (17) est logé dans l'orifice de verrouillage (180).

Lorsque l'opérateur souhaite amener l'ensemble escamotable (1) de la position dépliée à la position escamotée, il agit avec un outil approprié (20) épousant au moins sensiblement la forme de l'orifice calibré (19), sur l'élément d'arrêt (17) en engageant ledit outil approprié (20) sur l'élément d'arrêt (17). A ce stade, l'opérateur pousse davantage sur l'outil approprié (20) de manière à dégager l'élément d'arrêt (17) de l'orifice de verrouillage (180). Ensuite, tout en maintenant l'outil approprié (20) dans cette position, l'opérateur peut amorcer l'escamotage de l'ensemble escamotable (1) autour de l'articulation (3) jusque dans une position escamotée dans laquelle l'élément d'arrêt (17') va se loger automatiquement dans l'orifice de verrouillage (180), après que l'outil approprié (20) ait été retiré, grâce à l'élasticité de la tôle en acier ressort (130).

Pour amener à nouveau l'ensemble escamotable (1) dans sa position initiale, l'opérateur procède de la même manière, sauf pour effectuer le dégagement de l'élément d'arrêt (17'), puisqu'il y a possibilité de se servir de la poignée (21) située aux alentours dudit élément d'arrêt (17') pour dégager celui-ci de l'orifice de verrouillage (180).

Sur les figures 5 à 7 on voit un mécanisme de verrouillage (5A) selon une deuxième forme de réalisation implanté entre un ensemble escamotable (1A) et une structure fixe (2A), ledit ensemble escamotable (1A) étant lié à ladite structure fixe (2A) au moyen d'une articulation (3A) du type pivot. La structure fixe (2A) comporte un élément d'arrêt (17A) lié à celle-ci au moyen d'une liaison du type pivot. Selon cette forme de réalisation, l'élément d'arrêt (17A) est composé d'un loquet (26) ajusté librement sur une vis (27), laquelle est vissée dans la structure fixe (2A). Pour assurer un bon serrage de la vis (27), il est prévu une entretoise (28) prenant appui d'une part sur la vis (27) et d'autre part sur la structure fixe (2A).

Le loquet (26) est ajusté librement entre l'entretoise (28) et la tête de la vis (27) de manière à autoriser un pivotement de ce dernier sur ladite vis (27).

Le loquet (26) est maintenu en position sur la vis (27) d'une part au moyen d'un ressort spiral (29) guidé par la partie extérieure de l'entretoise (28) et d'autre part par une butée (30). A cet effet, le ressort spiral (29) prend appui d'une part sur le loquet (26), au moyen d'une entaille (32) prévue à cet effet sur ce dernier et d'autre part sur la structure fixe (2A) au moyen d'un trou (33) effectué dans celle-ci. La butée (30) assure, conjointement avec le ressort spiral (29), le maintien du loquet (26) et est composée selon cet exemple de réalisation d'une goupille élastique (34) logée dans la structure fixe (2A) au moyen d'un deuxième trou (35) effectué dans celle-ci. La goupille élastique (34) est située au-dessus de la vis (27), dans le voisinage de celle-ci, de manière à limiter le débattement dudit loquet (26) dans les deux sens. A cet effet, le loquet (26) comporte une entaille (36) au moins sensiblement égale à 90°, aux alentours de laquelle est située la goupille élastique (34).

Le loquet (26) comporte également à sa partie supérieure un bec (37) destiné à venir se loger dans un élément complémentaire (39) qui est, selon cette deuxième forme de réalisation, un mentonnet (390) en forme de "U" horizontal solidaire de l'ensemble escamotable (1A). Le mentonnet (390) comporte une partie inférieure (40) logée sous le bec (37) du loquet (26) lorsque l'ensemble escamotable (1A) est verrouillé. A cet effet, pour assurer un bon verrouillage, la partie inférieure (40) est dirigée quelque peu vers le haut et le bec (37) du loquet (26) est dirigé quelque peu vers le bas de manière à compléter la forme dudit mentonnet (390). Le bec (37) du loquet (26) comporte également une partie supérieure (41) inclinée vers l'avant et vers le bas de manière à favoriser d'une part la prise de l'outil approprié (20A) et d'autre part le verrouillage automatique de l'ensemble escamotable (1A).

Le mentonnet (390) comporte aussi une partie supérieure (42) au moins sensiblement parallèle à la partie inférieure (40), laquelle est munie d'un orifice calibré (19A) situé au moins sensiblement au-dessus du bec (37) du loquet (26). Un tel agencement permet d'accéder au loquet (26) et de commander le déverrouillage de l'ensemble escamotable (1A) uniquement au moyen d'un outil approprié (20A).

On notera que ce mécanisme de verrouillage (SA) est situé sur la machine agricole (11) de manière à ce que le loquet (26) ne soit pas accessible à la main lorsque l'ensemble escamotable (1A) est verrouillé. A cet effet, le loquet (26) est complètement enfermé au moyen de la structure fixe (2A) et du mentonnet (390), ce dernier comportant la partie supérieure (42) munie de l'orifice calibré (19A), la partie inférieure (40) et une face avant (43), ainsi que de deux parties latérales (44) fixées sur ladite partie inférieure (40) et la partie supérieure (42).

Une telle conception forme un dispositif de protection (22A) évitant à l'opérateur de se blesser.

Lorsque l'ensemble escamotable (1A) est dans sa position verrouillée, l'élément d'arrêt (17A) est logé dans le mentonnet (390).

Lorsque l'opérateur souhaite amener l'ensemble escamotable (1A) de la position verrouillée dans la position déverrouillée, il agit avec l'outil approprié (20A) épousant au moins sensiblement la forme de l'orifice calibré (19A), sur le bec (37) du loquet (26) en engageant ledit outil approprié (20A) dans ledit orifice calibré (19) jusqu'en butée sur ledit bec (37). A ce stade, l'opérateur effectue ensuite une rotation de l'outil approprié (20A) dans le sens (45), tout en le maintenant engagé dans l'orifice calibré (19A), de manière à dégager le loquet (26) du mentonnet (390). Dans cette position intermédiaire (figure 6), l'opérateur peut amorcer l'escamotage de l'ensemble escamotable (1A) autour de l'articulation (3A) jusque dans la position escamotée (représentée en traits pointillés), tout en maintenant le loquet (26) dégagé à l'aide de l'outil approprié (20A). L'outil approprié (20A) peut être retiré de l'orifice calibré (19A) dès que le loquet (26) ne sera plus en mesure de se prendre dans le mentonnet (390), ce qui permettra audit loquet (26) de revenir dans sa position initiale sous l'effet du ressort spiral (29).

Pour amener à nouveau l'ensemble escamotable (1A) dans sa position initiale, l'opérateur laisse revenir ledit ensemble escamotable (1A) dans sa position de verrouillage sous l'effet de son propre poids si celui-ci est escamoté verticalement, ce qui permet un verrouillage automatique du mécanisme de verrouillage (5A) grâce au ressort spiral (29) et à la forme du bec (37) qui s'escamote automatiquement sous l'action du mentonnet (390).

Finalement, différentes modifications restent possibles, notamment en ce qui concerne la constitution des divers éléments ou par substitution d'équivalents techniques, sans pour autant sortir du domaine de protection défini dans les revendications. C'est ainsi qu'il est parfaitement possible de réaliser selon la première forme de réalisation, un mécanisme de verrouillage (5) qui est doté de plusieurs orifices de verrouillage (180) situés sur un secteur, de façon à pouvoir verrouiller l'ensemble escamotable (1) dans plusieurs positions.

Inversement, il est également possible de supprimer le verrouillage lorsque l'ensemble escamotable (1) est dans la position repliée, ce qui revient à supprimer l'élément d'arrêt (17').

On peut encore imaginer que le mécanisme de verrouillage (5 ; 5A) peut être implanté sur la machine agricole (11) dans diverses positions.

Il est également concevable que la protection du loquet (26) soit conçue d'une manière différente sans faire appel à la structure fixe (2A), que ce serait alors le mentonnet (390) et les parties latérales (44) qui assurent l'enfermement dudit loquet (26).

## Revendications

1. Machine agricole comprenant un ensemble escamotable (1 ; lA) lié à une structure fixe (2 ; 2A) au moyen d'au moins une articulation (3 ; 3A), et un mécanisme de verrouillage (5 ; 5A) permettant d'une part d'immobiliser ledit ensemble escamotable (1 ; 1A) par rapport à ladite structure fixe (2 ; 2A) dans au moins une position au moyen d'au moins un élément élastique (13 ; 13A) et d'au moins un élément d'arrêt (17, 17'; 26), et d'autre part de libérer ledit ensemble escamotable (1; 1A) au moyen d'un outil approprié (20 ; 20A), ***caractérisée en ce que,*** dans au moins une position d'immobilisation dudit ensemble escamotable (1 ; 1A), le déverrouillage et l'escamotage de l'ensemble escamotable (1 ; 1A) nécessitent une action simultanée sur l'outil approprié (20 ; 20A) et sur ledit ensemble escamotable (1 ; 1A), ledit déverrouillage du mécanisme de verrouillage (5 ; 5A) n'étant possible qu'au travers d'au moins un orifice calibré (19 ; 19A) au moyen dudit outil approprié (20 ; 20A).

2. Machine agricole selon la revendication 1, ***caractérisée en ce que*** l'outil approprié (20 ; 20A) est un levier de déverrouillage.

3. Machine agricole selon la revendication 1 ou 2, ***caractérisée en que*** l' (les) élément(s) d'arrêt (17, 17' ; 26) dudit mécanisme de verrouillage (5 ; 5A) est (sont) solidaire(s) de l'ensemble escamotable (1 ; 1A) ou de la structure fixe (2 ; 2A).

4. Machine agricole selon l'une des revendications 1 à 3, ***caractérisée en ce qu***'au moins un élément d'arrêt (17, 17' ; 26) est destiné à collaborer avec au moins un élément complémentaire (18 ; 39) solidaire de la structure fixe (2 ; 2A) ou de l'ensemble escamotable (1 ; 1A) dans au moins une position de verrouillage.

5. Machine agricole selon l'une des revendications 1 à 4, ***caractérisée en ce que*** l' (les) articulation(s) (3 ; 3A) liant l'ensemble escamotable (1 ; 1A) à la structure fixe (2 ; 2A) est du type pivot.

6. Machine agricole selon l'une des revendications 1 à 5, ***caractérisée en ce que*** ledit mécanisme de verrouillage (5 ; 5A) comporte un dispositif de protection (22) destiné à éviter, lors de la manoeuvre dudit mécanisme de verrouillage (5 ; 5A), de générer des zones susceptibles de blesser l'opérateur.

7. Machine agricole selon l'une des revendications 1 à 6, ***caractérisée en ce que*** chaque orifice calibré (19 ; 19A) est situé sur l'ensemble escamotable (1 ; 1A) ou la structure fixe (2 ; 2A) au moins sensiblement en face de l' (des) élément(s) d'arrêt (17, 17' ; 26) correspondant(s).

8. Machine agricole selon l'une des revendications 1 à 7, ***caractérisée en ce que*** dans au moins une autre position de verrouillage que celle nécessitant un outil approprié (20 ; 20A) le déverrouillage de l'ensemble escamotable (1 ; 1A) peut être effectué sans outil approprié (20 ; 20A), au moyen d'une poignée (21) aisément accessible.

9. Machine agricole selon l'une des revendications 1 à 8, ***caractérisée en ce que*** l' (les) élément(s) élastique(s) (13) est (sont) composé(s) d'au moins une tôle en acier ressort.

10. Machine agricole selon la revendication 9, ***caractérisée en ce que*** l' (les) élément(s) élastique(s) (13) est (sont) d'une part de forme allongée et à l'une au moins de ses (leurs) extrémités (16, 16') de largeur inférieure ou égale à la dimension extérieure d'un profilé (9) de la structure fixe (2) et est (sont) d'autre part situé(s) à proximité et au moins sensiblement dans le prolongement dudit profilé (9), lorsque l' (les) élément(s) élastique(s) (13) est (sont) dans au moins une position verrouillée de manière que l'accès et la prise manuelle dudit (desdits) élément(s) élastique(s) (13) soient impossibles.

11. Machine agricole selon la revendication 9 ou 10, ***caractérisée en ce que*** ledit mécanisme de verrouillage (5 ; 5A) comporte deux éléments d'arrêt (17, 17') composés chacun d'un téton fixé aux alentours d'une extrémité respective de l'élément élastique (13).

12. Machine agricole selon l'une des revendications 6 à 11, ***caractérisée en ce que*** le dispositif de protection (22) est composé d'une tablette (23) en matière souple fixée à l'élément élastique (13).

13. Machine agricole selon l'une des revendications 9 à 12, ***caractérisée en ce que*** chaque articulation (3) liant l'ensemble escamotable (1) à la structure fixe (2) comporte deux ailes (4, 4') formant une chape située aux alentours d'une extrémité de l'ensemble escamotable (1), entre lesquelles s'étend d'une part une extrémité de la structure fixe (2) et d'autre part l' (les) élément(s) élastique(s) (13) muni(s) d'un dispositif de protection (22) respectif, l'ensemble étant maintenu par un tourillon (15) traversant de part en part la structure fixe (2), l' (les) élément(s) élastique(s) (13) et le dispositif de protection (22).

14. Machine agricole selon l'une des revendications 1 à 8, ***caractérisée en ce que*** l' (les) élément(s) élastique(s) (13A) est (sont) composé(s) d'au moins un ressort spiral (29).

15. Machine agricole selon la revendication 14, ***caractérisée en ce que*** chaque élément d'arrêt (17A) comporte au moins un loquet (26) monté sur la structure fixe (2A) au moyen d'une liaison pivot.

16. Machine agricole selon la revendication 15, ***caractérisée en ce que*** la liaison pivot liant le loquet (26) respectif à la structure fixe (2A), comporte au moins une vis (27) sur laquelle est monté ledit loquet (26) respectif et le ressort spiral (29) correspondant assurant le rappel dudit loquet (26).

## Claims

1. Agricultural machine comprising a retractable assembly (1; 1A) connected to a fixed structure (2; 2A) by means of at least one articulation (3; 3A) and a locking mechanism (5; 5A) making it possible, on the one hand, to immobilize the said retractable assembly (1; 1A) with respect to the said fixed structure (2; 2A) in at least one position by means of least one elastic element (13; 13A) and of at least one stop element (17, 17'; 26) and, on the other hand, of releasing the said retractable assembly (1; 1A) by means of an appropriate tool (20; 20A), ***characterized in* that**, in at least one position of immobilization of the said retractable assembly (1; 1A) unlocking and retracting the retractable assembly (1; 1A) require simultaneous action on the appropriate tool (20; 20A) and on the said retractable assembly (1; 1A), the said unlocking of the locking mechanism (5; 5A) being possible only through at least one calibrated orifice (19; 19A) using the said appropriate tool (20; 20A).

2. Agricultural machine according to Claim 1, ***characterized in* that** the appropriate tool (20; 20A) is an unlocking lever.

3. Agricultural machine according to Claim 1 or 2, ***characterized in* that** the stop element(s) (17, 17'; 26) of the said locking mechanism (5; 5A) is (are) secured to the retractable assembly (1; 1A) or to the fixed structure (2; 2A).

4. Agricultural machine according to one of Claims 1 to 3, ***characterized in* that** at least one stop element (17, 17'; 26) is intended to collaborate with at least one complementary element (18; 39) secured to the fixed structure (2; 2A) or to the retractable assembly (1; 1A) in at least one locking position.

5. Agricultural machine according to one of Claims 1 to 4, ***characterized in* that** the articulation(s) (3; 3A) connecting the retractable assembly (1; 1A) to the fixed structure (2; 2A) is of the pivot type.

6. Agricultural machine according to one of Claims 1 to 5, ***characterized in* that** the said locking mechanism (5; 5A) comprises a guard (22) intended, when the said locking mechanism (5; 5A) is manipulated, to avoid the generation of regions likely to injure the operator.

7. Agricultural machine according to one of Claims 1 to 6, ***characterized in* that** each calibrated orifice (19; 19A) is situated on the retractable assembly (1; 1A) or the fixed structure (2; 2A) at least approximately facing (the) corresponding stop element(s) (17, 17'; 26).

8. Agricultural machine according to one of Claims 1 to 7, ***characterized in* that** in at least one locking position other than the one requiring an appropriate tool (20; 20A), unlocking the retractable assembly (1; 1A) can be performed without an appropriate tool (20; 20A), using a readily accessible handle (21).

9. Agricultural machine according to one of Claims 1 to 8, ***characterized in* that** the elastic element(s) (13) is (are) made up of at least one sheet of spring steel.

10. Agricultural machine according to Claim 9, ***characterized in* that** the elastic element(s) (13) is (are), on the one hand, of elongate shape and, at least at one of its (their) ends (16; 16'), of a width less than or equal to the exterior dimension of a section (9) of the fixed structure (2) and is (are), on the other hand, located near and at least approximately in the continuation of, the said section (9), when the elastic element(s) (13) is (are) in at least one locked position so that access to, and manual grasping of, the said elastic element(s) (13) are impossible.

11. Agricultural machine according to Claim 9 or 10, ***characterized in* that** the said locking mechanism (5; 5A) comprises two stop elements (17; 17'), each made up of a stud fixed in the vicinity of a respective end of the elastic element (13).

12. Agricultural machine according to one of Claims 6 to 11, ***characterized in* that** the guard (22) is made of a panel (23) of flexible material fixed to the elastic element (13).

13. Agricultural machine according to one of Claims 9 to 12, ***characterized in* that** each articulation (3) connecting the retractable assembly (1) to the fixed structure (2) comprises two flanges (4, 4') forming a yoke situated in the vicinity of one end of the retractable assembly (1) and between which there runs, on the one hand, one end of the fixed structure (2) and, on the other hand, the elastic element(s) (13) equipped with a respective guard (22), the whole thing being held by a journal (15) passing right through the fixed structure (2), the elastic element(s) (13) and the guard (22).

14. Agricultural machine according to one of Claims 1 to *8,* ***characterized in* that** the elastic element(s) (13A) is (are) made up of at least one spiral spring (29).

15. Agricultural machine according to Claim 14, ***characterized in* that** each stop element (17A) comprises at least one catch (26) mounted on the fixed structure (2A) by means of a pivot connection.

16. Agricultural machine according to Claim 15, ***characterized in* that** the pivot connection connecting the respective catch (26) to the fixed structure (2A) comprises at least one screw (27) on which is mounted the said respective catch (26) and the corresponding spiral spring (29) which releases the said catch (26).

## Patentansprüche

1. Landmaschine, die eine mittels mindestens eines Gelenks (3; 3A) mit einem festen Gestell (2; 2A) verbundene klappbare Anordnung (1; 1A) und einen Verriegelungsmechanismus (5; 5A), der einerseits die Festlegung der klappbaren Anordnung (1; 1A) bezüglich des festen Gestells (2; 2A) in mindestens einer Position mittels mindestens eines elastischen Elements (13; 13A) und mindestens eines Sperrelements (17, 17'; 26) und andererseits die Freigabe der klappbaren Anordnung (1; 1A) mittels eines geeigneten Werkzeugs (20; 20A) gestattet, umfaßt; ***dadurch gekennzeichnet,* daß** in mindestens einer Festlegungsposition der klappbaren Anordnung (1; 1A) das Entriegeln und Einklappen der klappbaren Anordnung (1; 1A) ein gleichzeitiges Einwirken auf das geeignete Werkzeug (20; 20A) und auf die klappbare Anordnung (1; 1A) erfordern, wobei die Entriegelung des Verriegelungsmechanismus (5; 5A) nur durch mindestens eine kalibrierte Öffnung (19; 19A) mittels des geeigneten Werkzeugs (20; 20A) möglich ist.

2. Landmaschine nach Anspruch 1, ***dadurch gekennzeichnet,* daß** es sich bei dem geeigneten Werkzeug (20; 20A) um einen Entriegelungshebel handelt.

3. Landmaschine nach Anspruch 1 oder 2, ***dadurch gekennzeichnet,* daß** das (die) Sperrelement(e) (17, 17'; 26) des Verriegelungsmechanismus (5; 5A) mit der klappbaren Anordnung (1; 1A) oder dem festen Gestell (2; 2A) fest verbunden ist (sind).

4. Landmaschine nach einem der Ansprüche 1 bis 3, ***dadurch gekennzeichnet,* daß** in mindestens einer Verriegelungsposition mindestens ein Sperrelement (17, 17'; 26) mit mindestens einem komplementären Element (18; 39) zusammenwirken soll, das mit dem festen Gestell (2; 2A) oder der klappbaren Anordnung (1; 1A) fest verbunden ist.

5. Landmaschine nach einem der Ansprüche 1 bis 4, ***dadurch gekennzeichnet,* daß** das (die) Gelenk(e) (3; 3A), das (die) die klappbare Anordnung (1; 1A) mit dem festen Gestell (2; 2A) verbindet (verbinden), der Drehgelenkart ist (sind).

6. Landmaschine nach einem der Ansprüche 1 bis 5, ***dadurch gekennzeichnet,* daß** der Verriegelungsmechanismus (5; 5A) eine Schutzvorrichtung (22) aufweist, die bei der Betätigung des Verriegelungsmechanismus (5; 5A) das Entstehen von Zonen, die die Bedienperson verletzen können, vermeiden soll.

7. Landmaschine nach einem der Ansprüche 1 bis 6, ***dadurch gekennzeichnet,* daß** sich jede kalibrierte Öffnung (19; 19A) an der klappbaren Anordnung (1; 1A) oder dem festen Gestell (2; 2A) zumindest im wesentlichen gegenüber dem (den) entsprechenden Sperrelement(en) (17, 17'; 26) befindet.

8. Landmaschine nach einem der Ansprüche 1 bis 7, ***dadurch gekennzeichnet,* daß** die Entriegelung der klappbaren Anordnung (1; 1A) in mindestens einer anderen Verriegelungsposition als der, die ein geeignetes Werkzeug (20; 20A) erfordert, ohne geeignetes Werkzeug (20; 20A) mittels eines leicht zugänglichen Griffs (21) durchgeführt werden kann.

9. Landmaschine nach einem der Ansprüche 1 bis 8, ***dadurch gekennzeichnet,* daß** das (die) elastische(n) Element(e) (13) aus mindestens einem Federstahlblech besteht (bestehen).

10. Landmaschine nach Anspruch 9, ***dadurch gekennzeichnet,* daß** das (die) elastische(n) Element(e) (13) einerseits eine längliche Form und an mindestens einem seiner (ihrer) Enden (16, 16') eine Breite, die kleiner oder gleich der Außenabmessung eines Profils (9) des festen Gestells (2) ist, aufweist (aufweisen) und sich andererseits in der Nähe und zumindest im wesentlichen in der Verlängerung des Profils (9) befindet (befinden), wenn sich das (die) elastische(n) Element(e) (13) zumindest in einer verriegelten Position befindet (befinden), so daß der Zugang zu dem (den) elastischen Element(en) (13) und sein (ihr) manuelles Ergreifen unmöglich sind.

11. Landmaschine nach Anspruch 9 oder 10, ***dadurch gekennzeichnet,* daß** der Verriegelungsmechanismus (5; 5A) zwei Sperrelemente (17, 17') aufweist, die jeweils aus einem in der Umgebung eines jeweiligen Endes des elastischen Elements (13) befestigten Stift bestehen.

12. Landmaschine nach einem der Ansprüche 6 bis 11, ***dadurch gekennzeichnet,* daß** die Schutzvorrichtung (22) aus einer an dem elastischen Element (13) befestigten Platte (23) aus flexiblem Material besteht.

13. Landmaschine nach einem der Ansprüche 9 bis 12, ***dadurch gekennzeichnet,* daß** jedes die klappbare Anordnung (1) mit dem festen Gestell (2) verbindende Gelenk (3) zwei Schenkel (4, 4') aufweist, die eine sich in der Umgebung eines Endes der klappbaren Anordnung (1) befindende Gabel bilden und zwischen denen sich einerseits ein Ende des festen Gestells (2) und andererseits das (die) elastische(n) Element(e) (13), das (die) mit einer jeweiligen Schutzvorrichtung (22) versehen ist (sind), erstreckt (erstrecken), wobei die Anordnung durch einen das feste Gestell (2), das (die) elastische(n) Element(e) (13) und die Schutzvorrichtung (22) vollständig durchquerenden Zapfen (15) gehalten wird.

14. Landmaschine nach einem der Ansprüche 1 bis 8, ***dadurch gekennzeichnet,* daß** das (die) elastische(n) Element(e) (13A) aus mindestens einer Spiralfeder (29) besteht (bestehen).

15. Landmaschine nach Anspruch 14, ***dadurch gekennzeichnet,* daß** jedes Sperrelement (17A) mindestens eine Klinke (26) umfaßt, die mittels einer Schwenkverbindung an dem festen Gestell (2A) angebracht ist.

16. Landmaschine nach Anspruch 15, ***dadurch gekennzeichnet,* daß** die die jeweilige Klinke (26) mit dem festen Gestell (2A) verbindende Schwenkverbindung mindestens eine Schraube (27) umfaßt, an der die jeweilige Klinke (26) und die das Zurückholen der Klinke (26) gewährleistende entsprechende Spiralfeder (29) angebracht sind.
